# EUROPEAN PATENT APPLICATION

(11) **EP 3 407 312 A1**
(43) Date of publication of application: **28.11.2018**
(21) Application number: 17741469.5
(22) Date of filing: 19.01.2017
(51) Int. Cl.: G07D 9/00

(54) **CURRENCY HANDLING DEVICE AND CURRENCY HANDLING SYSTEM**

(30) Priority: 19.01.2016 JP 2016008182
(71) Applicant: Glory Ltd., Hyogo-ken 670-8567 (JP)
(72) Inventor: NAKASHIMA, Shinji, Himeji-shi Hyogo 670-8567 (JP); USHIRO, Hideki, Himeji-shi Hyogo 670-8567 (JP)
(74) Representative: Schwabe - Sandmair - Marx
(86) International application number: PCT/JP2017/001696
(87) International publication number: WO 2017/126592

(57) **Abstract**

One object is to efficiently reduce the load of a collector of a cash-in-transit company, a shop, and the like in transporting a plurality of money cassettes when the collector collects these money cassettes and transports them. Upon receiving an operation instructing storage of money in a state in which the banknote and/or the coin has been inserted into a banknote inlet (10) and/or a coin inlet (110), a lighter money cassette is selected by referring to money weight data stored in a memory, the banknote and/or the coin is stored in the selected money cassette, and then the money weight data is updated. Accordingly, each of the weight of the money stored in the money cassettes (X and Y) are equalized each other.

## Description

### [Technical Field]

The present invention relates to a proceeds deposit machine to which a plurality of banknote cassettes and/or a plurality of coin cassettes are attached in a detachable manner. The present invention particularly relates to a money handling apparatus and a money handling system that can efficiently reduce the load of staff members (hereinafter, "collector") of a cash-in-transit company or a shop who collect and transport the banknote cassettes and/or coin cassettes.

### [Background Art]

A money handling apparatus called a "proceeds deposit machine" for depositing proceeds from sales collected at a checkout counter of a shop is often installed in a commercial facility such as a supermarket and a department store. A banknote cassette and/or a coin cassette (these may be collectively called a "money cassette" in the below explanation) attached in a detachable manner to the proceeds deposit machine is transported by the collector to a cash center at a regular interval. This is to collect the money in the money cassette in the cash center.

Specifically, after the business hours of the shop or at a predetermined time during the business hours, a staff member (hereinafter, "checkout counter cashier") of each of the checkout counters deposits in the proceeds deposit machine the money being stored in a POS (Point Of Sales) terminal or a change machine (hereinafter, "change machine") that is installed at the checkout counter whereby the money is stored in the money cassette. Then, the collector collects the money cassette and delivers it to the cash center (for example, see Patent Document 1).

When the money stored in the money cassette exceeds a certain limit, the collector replaces the money cassette with another money cassette. However, this operation reduces the work efficiency. There is known a proceeds deposit machine that calculates a quantity of money that has been stored in the money cassette of the proceeds deposit machine and terminates subsequent money deposit process when the calculated quantity of money exceeds a predetermined limit.

For example, Patent Document 2 discloses a proceeds deposit machine that calculates an overall weight of the money stored in the money cassette of the money handling apparatus, and when the calculated overall weight exceeds a predetermined storing capacity limit level, as a general rule, terminates the subsequent money deposit process. The proceeds deposit machine disclosed in Patent Document 2 decreases the workload on the collector in replacing the money cassette by preventing the overall weight of the money cassette from exceeding the predetermined storing capacity limit level.

### [Citation List]

### [Patent Document]

[Patent Document 1] Japanese Patent No. 3865968
[Patent Document 2] Japanese Patent Application Laid-Open No.

### [Summary of Invention]

### [Technical Problem]

A proceeds deposit machine may be provided with a plurality of banknote cassettes for storing therein the banknotes and a plurality of coin cassettes for storing therein the coins. If each of weight of the banknote cassettes and/or the coin cassettes to transport is remarkably different from each other, it is inconvenient for the collectors to carry the banknote cassettes and/or the coin cassettes.

For example, assume that the proceeds deposit machine is provided with two coin cassettes each of which can store therein the coins of 25 kg, and the total weight of the coins that are stored in the two coin cassettes is 30 kg. If the coins of 20 kg are stored in one coin cassette and the coins of 5 kg are stored in the other coin cassette, then only one of the coin cassettes becomes heavy, and the collector may have difficulty in carrying the two coin cassettes together. The reason is that, one of the coin cassettes is heavier by 10 kg than the other one and an uneven balance by weight occurs in the two coin cassettes in comparison to a case where the coins of 15 kg are stored in each of the two coin cassettes . Depending on the situation, a body part of the collector may be affected.

Accordingly, when the collector collects a plurality of money cassettes mounted in the proceeds deposit machine, it is an important issue to efficiently reduce the load of the collector in the transportation of the money cassettes. Such the issue occurs not only for the proceeds from sales but also for a money handling apparatus including a plurality of money storage units that can be collected by the collector.

The present invention has been made in view of the above discussion. One object of the present invention is to provide a money handling apparatus and a money handling system that can efficiently reduce the load of a collector in transporting money storage units when the collector collects those money storage units.

### [Means for Solving Problems]

To solve the above problems, according to one aspect of the present invention, a money handling apparatus includes an inlet configured to take in money into a body of the apparatus; a plurality of money storage units configured to be detachably arranged to the body and store thereinto the money; and a control unit configured to control so as to store the money taken in from the inlet into the money storage units such that the weight of the money stored in each of the money storage units is substantially equal to each other.

The above money handling apparatus further includes a plurality of temporary storage units configured to temporarily store thereinto all or a part of the money taken in from the inlet, temporary storage units each being arranged to each of corresponding the plurality of money storage units. The control unit controls so as to temporarily store the money taken in from the inlet into the temporary storage units such that the weight of the money to be stored into each of the money storage units is substantially equal, and controls so as to store the money temporarily stored in the temporary storage units into the corresponding money storage units.

The above money handling apparatus further includes a temporary storage unit configured to be arranged between the inlet and the money storage units and temporarily store all or a part of the money taken in from the inlet. The control unit controls so as to temporarily store the money taken in from the inlet into the temporary storage unit, and in response to a predetermined operation, controls so as to store the money stored in the temporary storage unit into the money storage units such that the weight of the money to be stored in the money storage units is substantially equal.

In the above money handling apparatus, the control unit identifies the each weight of the money stored in each of the money storage units, compares the identified each weight of the money stored in each of the money storage units, and controls so as to store the money taken in from the inlet into the money storage unit in which the weight of the money contained therein is the lightest.

In the above money handling apparatus, the control unit calculates the weight of the money from a number of the money for each denomination stored in the money storage unit and weight of one piece of money.

In the above money handling apparatus, the control unit obtains the weight of the money based on a signal from a weight sensor arranged corresponding to each of the money storage units.

In the above money handling apparatus, the control unit calculates the weight of the money temporarily stored in the temporary storage unit corresponding to the money storage unit, compares the calculated weight of the money temporarily stored in the temporary storage units, and controls to temporarily store the money taken in from the inlet into the temporary storage unit of which the weight of the money contained therein is the lightest.

In the above money handling apparatus, the control unit controls so as to receive the money taken in from the inlet by a transaction, and changes the money storage unit as a storing destination of the money taken in from the inlet by the transaction.

In the above money handling apparatus, the control unit controls so as to change a storing destination of the money taken in from the inlet to a second money storage unit when the weight of the money stored in a first money storage unit as a current storing destination reaches a predetermined weight.

In the above money handling apparatus, the control unit controls so as to change a temporarily soring destination of the money taken in from the inlet to a second temporary storage unit when the weight of the money stored in a first temporary storage unit as a current temporarily storing destination reaches a predetermined weight.

In the above money handling apparatus, the control unit, upon receiving an operation to select a predetermined change fund mode, controls so as to temporarily store a predetermined number of money of a denomination previously specified as change fund in a first temporary storage unit, and controls so as to temporarily store money that exceeds the predetermined number and money of a denomination not specified as the change fund in a second temporary storage unit.

According to another aspect of the present invention, a money handling system is a money handling system in which a plurality of change machines and a money handling apparatus arranged in a shop are communicably connected. Each of the change machines includes a notifying unit that notifies, at a previously specified time point, the money handling apparatus of money information relating to a schedule of deposit. The money handling apparatus includes an inlet configured to take in money into a body of the apparatus; a plurality of money storage units configured to be detachably arranged to the body and store thereinto the money; a scheduling unit configured, based on the money information notified from the change machines, to perform scheduling to distribute money in the money storage units such that the weight of the money to be stored in each of the money storage units is substantially equal to each other; an identifying unit configured to identify the change machine in which money to be taken in from the inlet is present; and a control unit configured to control, when the money present in the change machine identified by the identifying unit is taken in from the inlet, so as to store the money in the money storage unit scheduled by the scheduling unit.

### [Advantageous Effects of Invention]

According to the present invention, a money handling apparatus includes an inlet configured to take in money into a body of the apparatus; a plurality of money storage units configured to be detachably arranged to the body and store thereinto the money; and a control unit configured to control so as to store the money taken in from the inlet into the money storage units such that the weight of the money stored in each of the money storage units is substantially equal to each other. As a result, when a collector of a cash-in-transit company, a shop, and the like collects the money storage units, the load of the staff member in transporting the money storage units can be efficiently reduced.

### [Brief Description of Drawings]

FIG. 1 is a view for explaining a concept of a proceeds deposit machine according to the present invention.
FIG. 2 is a perspective view of an external appearance of the proceeds deposit machine according to a first embodiment.
FIG. 3 is a view of an internal configuration of the proceeds deposit machine shown in FIG. 2.
FIG. 4 is a functional block diagram of the proceeds deposit machine shown in FIG. 2.
FIGS. 5A to 5C are views indicating an example of each of unit weight data, inventory amount data, and money weight data shown in FIG. 4.
FIG. 6 is a flowchart of a process procedure performed by the proceeds deposit machine shown in FIG. 2.
FIG. 7 is a view of an internal configuration of a proceeds deposit machine according to a second embodiment.
FIG. 8 is a functional block diagram of the proceeds deposit machine shown in FIG. 7.
FIG. 9 is a flowchart of a process procedure performed by the proceeds deposit machine shown in FIG. 7.
FIG. 10 is a view of a variation in which a weight sensor is provided in a temporary storage unit.
FIG. 11 is a functional block diagram of a proceeds deposit machine according to a third embodiment.
FIG. 12 is a flowchart of a process procedure performed by the proceeds deposit machine shown in FIG. 11.
FIG. 13 is a functional block diagram of a proceeds deposit machine according to a fourth embodiment.
FIG. 14 is a flowchart of a process procedure performed by the proceeds deposit machine shown in FIG. 13.
FIG. 15 is a view of a system configuration according to a fifth embodiment.
FIG. 16 is a functional block diagram of a proceeds deposit machine shown in FIG. 15.
FIG. 17 is a view indicating an example of a relationship between a checkout counter change machine and a money cassette.
FIG. 18 is a flowchart of a process procedure performed by the proceeds deposit machine shown in FIG. 16.
FIGS. 19A and 19B are views indicating an example of configuration of a note pressing mechanism.
FIGS. 20A to 20C are views indicating an example of an operation of a conventional note pressing mechanism.
FIGS. 21A to 21C are views indicating an example of an operation of a note pressing mechanism according to the present embodiment.

### [Description of Embodiments]

Exemplary embodiments of a money handling apparatus and a money handling system according to the present invention are explained below while referring to the accompanying drawings. Note that, in the present embodiment, the explanation has been given for a case in which the present invention is applied to a proceeds deposit machine; however, the present invention is not limited to this and can be applied to various money handling apparatuses that include a plurality of money cassettes that can be collected by a collector.

### Concept of Proceeds Deposit Machine

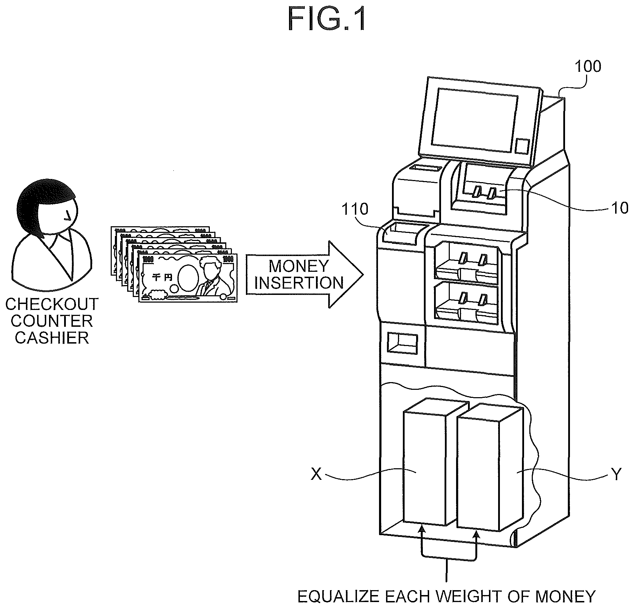

First of all, a concept of a proceeds deposit machine according to the present invention is explained. FIG. 1 is an explanatory view for explaining the concept of the proceeds deposit machine according to the present invention. A proceeds deposit machine 100 shown in this drawing is a device that is installed in a back office and the like of a shop and that receives deposit of proceeds from sales present at a plurality of checkout counters provided in the shop. A plurality of money cassettes X and Y are detachably attached to the proceeds deposit machine 100. The money deposited as the proceeds from sales is stored in the money cassette X or the money cassette Y. When a predetermined time of a day comes, a collector of a cash-in-transit company, the shop, and the like detaches the money cassette X and/or Y from the proceeds deposit machine 100, and the cassette is delivered to a cash center. For the convenience of explanation, two money cassettes X and Y have been shown; however, actually there can be a plurality of banknote cassettes and/or a plurality of coin cassettes.

The proceeds deposit machine 100 is characterized in that weight of the money stored in the money cassette X and weight of the money stored in the money cassette Y are equalized. Specifically, the proceeds deposit machine 100 is configured such that "when the proceeds from sales is newly deposited therein, the money as the proceeds from sales is stored in the money cassette X or the money cassette Y that is the lightest in weight" . This is because, when the collector holds the money cassette X with his right hand, holds the money cassette Y with his left hand, and tries to carry both the money cassettes X and Y at the same time, it is possible that a body part of the collector may be affected when there is an uneven balance between the weight of the money cassette X and the weight of the money cassette Y.

Note that, since a plurality of the banknote cassettes and a plurality of the coin cassettes are detachably attached to the proceeds deposit machine 100, it is particularly significant to substantially equalize each of the weight of the coin cassettes each other is particularly prominent as the weight of the coins in the coin cassettes is heavier than the weight of the banknotes in the banknote cassettes.

### FIRST EMBODIMENT

### External Appearance of Proceeds Deposit Machine

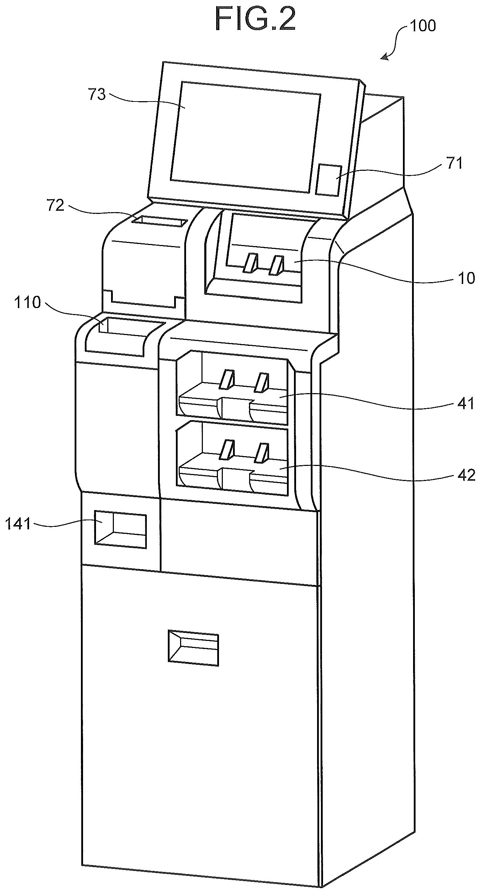

An external appearance of the proceeds deposit machine 100 according to a first embodiment is explained next. FIG. 2 is a perspective view of the external appearance of the proceeds deposit machine 100 according to the first embodiment. As shown in this drawing, the proceeds deposit machine 100 includes a display/operation unit 73, an IC card reader 71, a receipt printer 72, a coin inlet 110, a banknote inlet 10, a banknote reject unit 41, a banknote stacker 42, and a coin reject unit 141.

The display/operation unit 73 is arranged at an upper part of the proceeds deposit machine 100. Indication relating to various processes is displayed on the display/operation unit 73. The display/operation unit 73 is a touch-type display unit that is capable of receiving operation input by a checkout counter cashier or the collector. The IC card reader 71 is a card reader capable of reading data stored in an IC card such as a cashier card of the checkout counter cashier or the collector. The receipt printer 72 is a printing unit of a thermal printing type and the like capable of printing a receipt and the like.

The checkout counter cashier inserts the coins from the coin inlet 110 as an inlet to take in the coins into the proceeds deposit machine 100, and/or the checkout counter cashier inserts the banknotes from the banknote inlet 10 as the inlet to take in the coins into the proceeds deposit machine 100. The coins and the banknotes forming the proceeds from sales that the checkout counter cashier brings are inserted into the coin inlet 110 and the banknote inlet 10, respectively.

The banknote reject unit 41 is an outlet part to which, among the banknotes inserted into the banknote inlet 10, a banknote whose denomination could not be recognized is transported. The banknote stacker 42 is a stacker to which a banknote that satisfies a predetermined condition set previously is transported. The coin reject unit 141 is an outlet part in which, among the coins inserted into the coin inlet 110, a coin whose denomination could not be recognized is discharged.

### Operation of Proceeds Deposit Machine at the time of Deposit of Proceeds from Sales

An operation performed by the proceeds deposit machine 100 at the time of deposit of the proceeds from sales is explained next. A case is explained here in which the checkout counter cashier deposits in the proceeds deposit machine 100 the proceeds from sales present in a change machine and the like arranged on the checkout counter; however, the same technique can be applied to a case in which a salesclerk other than the checkout counter cashier deposits the proceeds from sales in the proceeds deposit machine 100.

First of all, when the checkout counter cashier holds the cashier card (IC card) over the IC card reader 71 of the proceeds deposit machine 100, the IC card reader 71 reads recognition information of the staff member stored in the cashier card and identifies a checkout counter number from the recognition information. Note that, the checkout counter cashier can directly input the checkout counter number and the like by using the display/operation unit 73.

Then, the checkout counter cashier inserts into the banknote inlet 10 the banknotes collected from the change machine and the like, inserts into the coin inlet 110 the coins collected from the change machine and the like, and by using the display/operation unit 73 performs an operation that instructs to perform money deposit. Upon receiving the operation that instructs to perform the money deposit, the proceeds deposit machine 100 feeds the banknotes inserted into the banknote inlet 10, recognizes the genuineness and the denomination of the banknotes, and counts the number of the banknotes for each denomination that are recognized as genuine notes. Moreover, the proceeds deposit machine 100 takes in the coins inserted into the coin inlet 110, recognizes the genuineness and the denomination of the coins, and counts the number of the coins for each denomination that are recognized as genuine coins.

After a counting process of the banknotes and the coins is finished, the proceeds deposit machine 100 displays the result of the counting process on the display/operation unit 73. Then, upon receiving an operation (approval operation) to perform the money deposit process based on the displayed contents, the proceeds deposit machine 100 stores the counted banknotes and coins in the banknote cassette and the coin cassette, respectively. Note that, in the first embodiment, among the two banknote cassettes, the banknotes are stored in one banknote cassette of which the weight of the banknotes contained therein is lighter than the other banknote cassette. Similarly, the coins are stored in one coin cassette of which the weight of the coins contained therein is lighter than the other coin cassette among the two coin cassettes.

Then, deposit data is registered in not-shown deposit history data. Moreover, the proceeds deposit machine 100 issues a receipt (deposit result statement) including authentication information, including the checkout counter number of each of a collection origin and the checkout counter cashier, and the deposit data.

In this manner, the proceeds deposit machine 100 upon receiving the cashier card, identifies the checkout counter number of the collection origin, upon receiving the money, recognizes the denomination of the received money and counts the number of money for each denomination, stores the money so that each of the weight of the money cassettes are equalized each other, registers the checkout counter number and the deposit data in the deposit history data, and issues the receipt including this information.

### Internal Configuration and Operation of Proceeds Deposit Machine

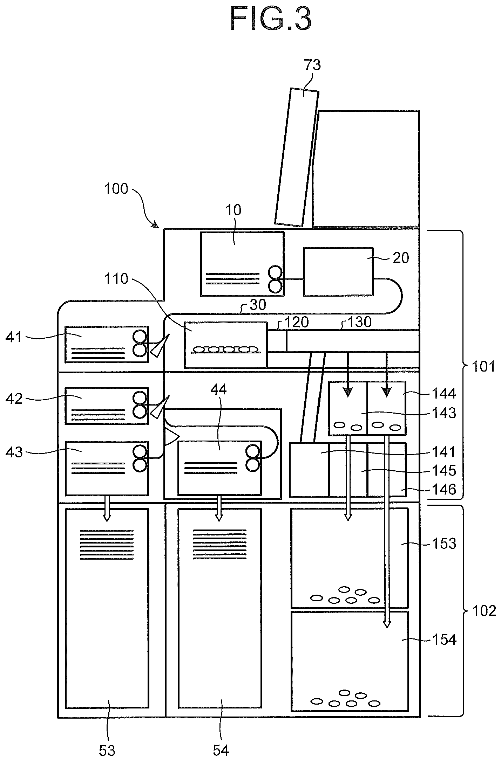

An internal configuration and an operation of the proceeds deposit machine 100 shown in FIG. 2 is explained next. FIG. 3 is a view of the internal configuration of the proceeds deposit machine 100 shown in FIG. 2.

First, the money deposit process of the banknote will be explained. The banknote inserted into the banknote inlet 10 is transported by a transport unit 30 to a recognition unit 20 that recognizes a denomination of the banknote. The recognition unit 20 includes an image scanner that acquires an image and the like of the transported banknote. The banknote recognized by the recognition unit 20 is transported by the transport unit 30 to the banknote reject unit 41, the banknote stacker 42, and a temporary storage unit 43 or a temporary storage unit 44.

A banknote whose denomination could not be recognized by the recognition unit 20 is transported to the banknote reject unit 41. A banknote whose denomination has been recognized by the recognition unit 20 is transported to the temporary storage unit 43 or 44. In this case, the banknote is transported to the temporary storage unit 43 or 44 depending on the each of the weight of the banknotes in banknote cassettes 53 and 54 to substantially equalize each of the weight of the banknotes in the banknote cassettes 53 and 54 each other. Note that, a criterion to be used when discharging the banknote in the banknote stacker 42 can be set as desired in the shop side.

The banknote cassettes 53 and 54 are arranged below the temporary storage units 43 and 44, respectively. The banknote temporarily stored in the temporary storage unit 43 is then stored in the banknote cassette 53, and the banknote temporarily stored in the temporary storage unit 44 is then stored in the banknote cassette 54. Note that, by pulling a temporary storage portion including the temporary storage units 43 and 44 toward a front side of the proceeds deposit machine, the banknotes temporarily stored in the temporary storage units 43 and 44 can be taken out of the temporary storage units 43 and 44.

The money deposit process of the coin will be explained next. The coin inserted into the coin inlet 110 is transported to a coin recognition unit 120. The coin recognition unit 120 recognizes a denomination of the coin that is fed from the coin inlet 110. The coin subjected to a recognition process in the coin recognition unit 120 is transported by a coin transport unit 130 including three sorting mechanisms to one among the coin reject unit 141 and coin temporary storage units 143 and 144.

A coin whose denomination could not be recognized by the coin recognition unit 120 is transported to the coin reject unit 141. A coin whose denomination has been recognized by the coin recognition unit 120 is sorted to one of the coin temporary storage units 143 and 144. In this case, the coin is transported to the coin temporary storage unit 143 or the coin temporary storage unit 144 depending on the each of the weight of the coins stored in coin cassettes 153 and 154. This is to equalize each of the weight of the coin cassettes 153 and 154 each other.

Coin return boxes 145 and 146, in which the coin is returned upon receiving an instruction to return the coins that have been transported to the coin temporary storage units 143 and 144, are arranged below the coin temporary storage units 143 and 144, respectively. When an operation that instructs to return the counted coins in a state in which the counted coins have been temporarily stored in any of the coin temporary storage units 143 and 144 is received, the coin temporarily stored in the coin temporary storage unit 143 or 144 is moved to the coin return box 145 or 146. The coin cassettes 153 and 154, in which the coins that have been transported to the coin temporary storage units 143 and 144 upon receiving a storage instruction are stored, are arranged further below the coin return boxes 145 and 146, respectively. The coin temporarily stored in the coin temporary storage unit 143 is then stored in the coin cassette 153, and the coin temporarily stored in the coin temporary storage unit 144 is then stored in the coin cassette 154. Note that, by pulling a coin temporary storage portion including the coin return boxes 145 and 146 toward the device front side the coins that were transported to the coin return boxes 145 and 146 can be taken out of the coin return boxes 145 and 146.

The proceeds deposit machine 100 includes an upper unit 101 and a lower unit 102. When a predetermined operation is performed by the collector having powers and authorities for collecting the money stored in the proceeds deposit machine 100, an electromagnetic lock is released, and the lower unit 102 including the banknote cassettes 53 and 54 and the coin cassettes 153 and 154 can be pulled out. By pulling out the lower unit 102, the banknote cassettes 53 and 54 and the coin cassettes 153 and 154 can be taken out. The collector of the cash-in-transit company, the shop, and the like can pull out the lower unit 102 to take out the banknote cassettes 53 and 54 and the coin cassettes 153 and 154 from the lower unit 102, and carry those cassettes to the cash center and the like.

### Internal Functional Configuration of Proceeds Deposit Machine

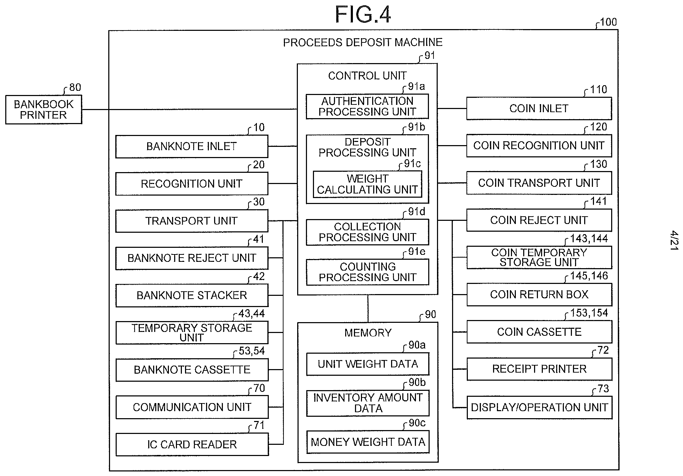

An internal functional configuration of the proceeds deposit machine 100 shown in FIG. 2 is explained next. FIG. 4 is a functional block diagram of the proceeds deposit machine 100. A bankbook printer 80 and the like can be connected to the proceeds deposit machine 100 as an optional apparatus. The bankbook printer 80 is an output device that outputs to a recording medium of a bankbook type a history of deposit of the proceeds from sales in the proceeds deposit machine 100.

The proceeds deposit machine 100 includes the banknote inlet 10, the recognition unit 20, the transport unit 30, the banknote reject unit 41, the banknote stacker 42, the temporary storage units 43 and 44, the banknote cassettes 53 and 54, a communication unit 70, the IC card reader 71, the receipt printer 72, the display/operation unit 73, the coin inlet 110, the coin recognition unit 120, the coin transport unit 130, the coin reject unit 141, the coin temporary storage units 143 and 144, the coin return boxes 145 and 146, the coin cassettes 153 and 154, a memory 90, and a control unit 91. An explanation will be given centering on the parts that have not been shown in FIG. 3. The communication unit 70 is an interface unit for performing data communication with other devices via a communication line and a communication network.

The memory 90 is a storage device such as a hard disk drive and a nonvolatile memory. The memory 90 stores therein unit weight data 90a, inventory amount data 90b, and money weight data 90c. The unit weight data 90a is data about a unit weight of one piece of the money of each of the denominations . The inventory amount data 90b is data about number of the banknotes for each denomination stored in the banknote cassettes 53 and 54 and data about number of the coins for each denomination stored in the coin cassettes 153 and 154. The money weight data 90c is data about the weight of the money stored in the banknote cassettes 53 and 54 and the coin cassettes 153 and 154.

The control unit 91 is a control unit that controls the entire proceeds deposit machine 100. The control unit 91 includes an authentication processing unit 91a, a deposit processing unit 91b, a collection processing unit 91d, and a counting processing unit 91e. The deposit processing unit 91b includes a weight calculating unit 91c. As a practical matter, one or more computer programs corresponding to these functional units are stored in a not-shown ROM or a nonvolatile memory, and a corresponding processing is performed by loading the corresponding computer program in a CPU (Central Processing Unit) and executing the computer program.

The authentication processing unit 91a performs an authentication process on an operator who is the checkout counter cashier or the collector. Specifically, the recognition information of the checkout counter cashier or the staff member is read from the cashier card by using the IC card reader 71, and whether the operator has the powers and authorities to perform the money deposit process of the proceeds from sales or the collection process of taking out the deposited money is determined.

The deposit processing unit 91b performs a display control to display on the display/operation unit 73 a screen relating to the money deposit process of the proceeds from sales . In response to an operation of the display/operation unit 73 by the operator, recognition of the denomination and counting of number for each denomination of the banknotes received in the banknote inlet 10, and recognition of the denomination and counting of number for each denomination of the coins received in the coin inlet 110 are performed. The result of counting of the money is displayed on the display/operation unit 73. After the counting of the money is over, upon receiving an operation (approval operation) via the display/operation unit 73 instructing deposit of the counted money, the deposit processing unit 91b stores the counted money in the banknote cassette 53 or 54 and the coin cassette 153 or 154 based on a result of calculation of the weight obtained in the weight calculating unit 91c. Specifically, upon newly storing the banknote in the banknote cassette 53 or 54, the weight of the money present in the banknote cassette 54 is compared with the weight of the money present in the banknote cassette 53 at that point in time, and for example, the banknote cassette 53 having the lighter weight of the money is selected, and this banknote is temporarily stored in the temporary storage unit 43 corresponding to the banknote cassette 53.

The weight calculating unit 91c is a processing unit that calculates the weight of the money deposited as the proceeds from sales. Specifically, the weight calculating unit 91c calculates the weight of the money by multiplying the unit weight of one piece of the money of each of the denominations contained in the unit weight data 90a with the number of the money for each denomination. For example, assuming that "10 JPY 500 coins" and "20 JPY 10 coins" are present in the coin cassette 153, because the unit money weight of the JPY 500 coin is 7.0 g and the unit money weight of the JPY 10 coin is 4.5 g, the weight of the coins in the coin cassette 153 is "(7.0 g × 10) + (4.5 g × 20) = 160 g".

The deposit processing unit 91b adds to the inventory amount data 90b information relating to the money stored in the money deposit process, and the deposit result statement is printed by the receipt printer 72. If the bankbook printer 80 has been connected, the same matter to be printed by the receipt printer 72 can be output to the recording medium of the bankbook type.

The collection processing unit 91d allows a collection process operation only when the operator has the powers and authorities to perform the collection process. Upon allowing the collection process operation, the collection processing unit 91d releases the electromagnetic lock so that the lower unit 102 can be pulled out of the device. Upon detecting removal of the banknote cassettes 53 and 54 and the coin cassettes 153 and 154 from the lower unit 102, the collection processing unit 91d initializes the inventory amount data 90b.

When an operation that instructs to perform counting is received via the display/operation unit 73, the counting processing unit 91e performs an aggregation processing of the deposit data and outputs the result to the display/operation unit 73 or the receipt printer 72. The proceeds deposit machine 100 can communicate with a host management computer and/or another proceeds deposit machine via the communication unit 70.

### Example of Data

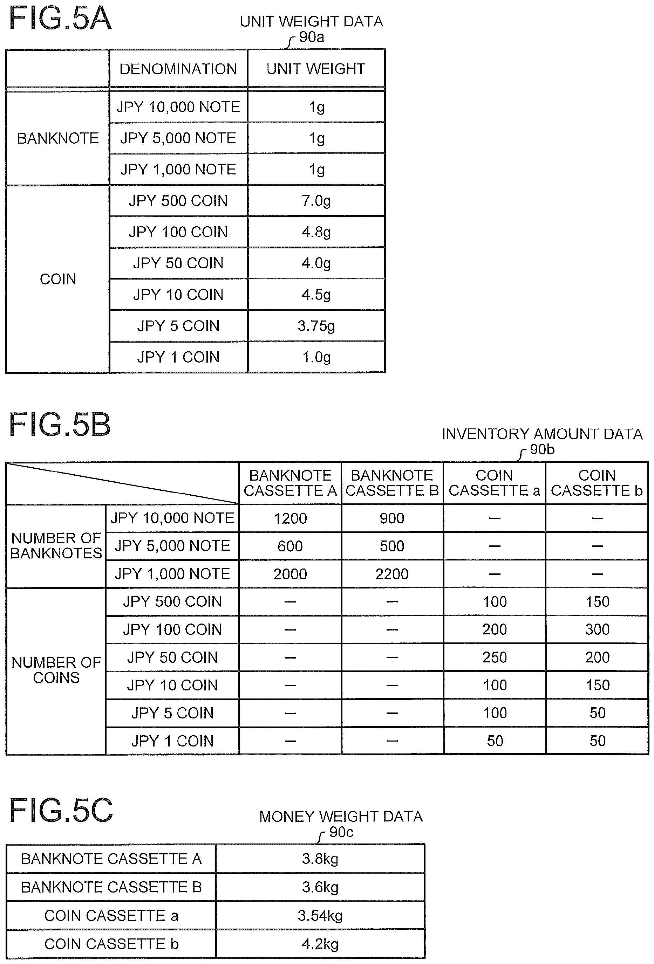

An example of the unit weight data 90a, the inventory amount data 90b, and the money weight data 90c shown in FIG. 4 is explained by using FIGS. 5A to 5C, respectively. FIGS. 5A to 5C are views showing the example of the unit weight data 90a, the inventory amount data 90b, and the money weight data 90c shown in FIG. 4, respectively.

The unit weight data 90a is data containing the unit weight of one piece of the money of each of the denominations. This example shows that the unit weight of a JPY 10, 000 note is 1 g/note, the unit weight of a JPY 5, 000 note is 1 g/note, the unit weight of a JPY 1,000 note is 1 g/note, the unit weight of a JPY 500 coin is 7.0 g/coin, the unit weight of a JPY 100 coin is 4.8 g/coin, the unit weight of a JPY 50 coin is 4.0 g/coin, the unit weight of a JPY 10 coin is 4.5 g/coin, the unit weight of a JPY 5 coin is 3.75 g/coin, and the unit weight of a JPY 1 coin is 1.0 g/coin.

The inventory amount data 90b is data containing the number of the banknotes and the coins for each denomination that are stored in each of the banknote cassettes 53 and 54 and the coin cassettes 153 and 154. This example shows that 1200 JPY 10, 000 notes, 600 JPY 5, 000 notes, and 2000 JPY 1,000 notes are stored in the banknote cassette 53 (hereinafter, "banknote cassette A"), and 900 JPY 10,000 note, 500 JPY 5, 000 notes, and 2200 JPY 1,000 notes are stored in the banknote cassette 54 (hereinafter, "banknote cassette B") . Moreover, 100 JPY 500 coins, 200 JPY 100 coins, 250 JPY 50 coins, 100 JPY 10 coins, 100 JPY 5 coins, and 50 JPY 1 coins are stored in the coin cassette 153 (hereinafter, "coin cassette a"), and 150 JPY 500 coins, 300 JPY 100 coins, 200 JPY 50 coins, 150 JPY 10 coins, 50 JPY 5 coins, and 50 JPY 1 coins are stored in the coin cassette 154 (hereinafter, "coin cassette b")

The money weight data 90c is data containing the weight of the money stored in each money cassette. This example shows that 3.8 kg of money is stored in the banknote cassette A, 3.6 kg of money is stored in the banknote cassette B, 3.54 kg of money is stored in the coin cassette a, and 4.2 kg of money is stored in the coin cassette b.

### Money Deposit Process Procedure Performed by Proceeds Deposit Machine

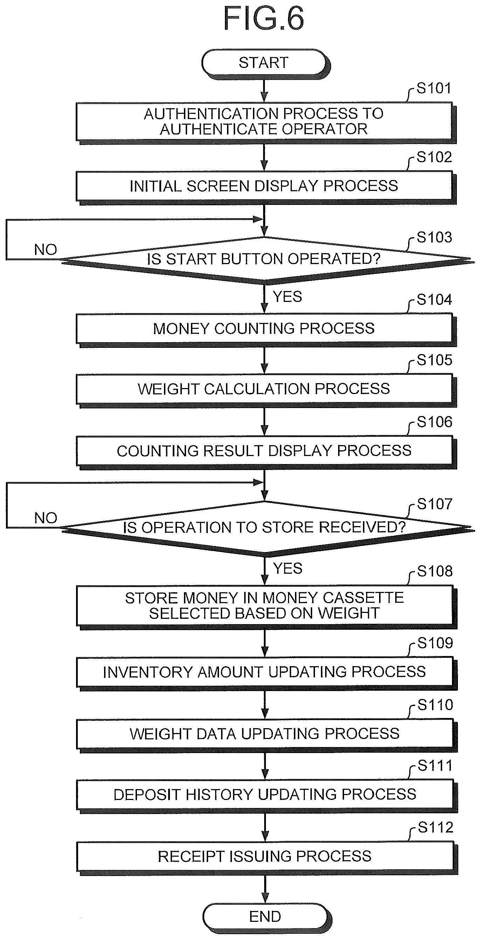

A process procedure performed by the proceeds deposit machine 100 shown in FIG. 2 is explained next. FIG. 6 is a flowchart of the process procedure performed by the proceeds deposit machine 100 shown in FIG. 2. As shown in this drawing, when the checkout counter cashier holds his cashier card over the IC card reader 71, the data recorded in the cashier card is read by the IC card reader 71, and the authentication processing unit 91a performs the authentication process by using the read data (recognition information of the staff member) (Step S101). Specifically, it is determined whether the checkout counter cashier has the powers and authorities to perform the money deposit process in the proceeds deposit machine 100.

When it is determined that the checkout counter cashier has the powers and authorities, to enable the money deposit process, an initial screen of the money deposit process is displayed on the display/operation unit 73 (Step S102). Note that, though omitted from the drawings for the convenience of explanation, when it is determined that the checkout counter cashier has no powers and authorities, a message indicating this fact is displayed, and the process is finished.

When a start button on the initial screen displayed at Step S102 is operated (YES: Step S103), a counting process of the banknotes inserted into the banknote inlet 10 and/or a counting process of the coins inserted into the coin inlet 110 is performed (Step S104) . Moreover, if the counting process of the banknotes is performed, the weight of the banknotes is calculated (Step S105), and if the counting process of the coins is performed, the weight of the coins is calculated (Step S105) . Then, the result of counting is displayed (Step S106).

If an operation instructing storage of the money is received from the checkout counter cashier (YES: Step S107), the money cassette is selected based on the weight of the money, and the money is stored in the selected money cassette (Step S108). Specifically, the money weight data 90c stored in the memory 90 is referred, the weight of the banknotes in the banknote cassette A and the weight of the banknotes in the banknote cassette B are compared, and the banknote is stored in the temporary storage unit corresponding to the lighter banknote cassette. Similarly, the weight of the coins in the coin cassette a and the weight of the coins in the coin cassette b are compared, and the coin is stored in the temporary storage unit corresponding to the lighter coin cassette. Note that, the banknote/coin temporarily stored in the temporary storage unit is stored in the banknote/coin cassette corresponding to the temporary storage unit, respectively.

Then, the number of the money stored at Step S108 is added to the inventory amount data 90b (Step S109), and the weight of the money stored at Step S108 is added to the money weight data 90c (Step S110). This is to enable selection of the lighter money cassette when the money is deposited next.

Then, the deposit processing unit 91b registers the result of money deposit process in not-shown deposit history data (Step S111), a receipt on which is printed the result of money deposit process is issued by the receipt printer 72 (Step S112), and the process is finished.

As has been explained above, in the first embodiment, upon receiving an operation instructing storage of the money in a state in which the banknote and/or the coin has been inserted into the banknote inlet 10 and/or the coin inlet 110, the lightest money cassette is selected by referring to the money weight data 90c stored in the memory 90, the banknote and/or the coin is stored in the selected money cassette, and then the money weight data 90c is updated. Therefore, when the staff member of the cash-in-transit company, the shop, and the like collects the banknote cassettes 53 and 54 and/or the coin cassettes 153 and 154, the load of the staff member in transporting the banknote cassettes 53 and 54 and/or the coin cassettes 153 and 154 can be efficiently reduced.

### SECOND EMBODIMENT

In the first embodiment, the weight of the banknotes and/or the coins is calculated from the number of the banknotes inserted into the banknote inlet 10 and/or the number of the coins inserted into the coin inlet 110; however, the present invention is not limited to this, and the weight of the banknotes and/or the coins can be detected by using weight sensors. A second embodiment relates to detecting the weight of the banknotes and/or the coins by using the weight sensors. Note that, structural components that are identical to the structural components of the first embodiment will be indicated by the same reference symbols and detailed explanation thereof will be omitted.

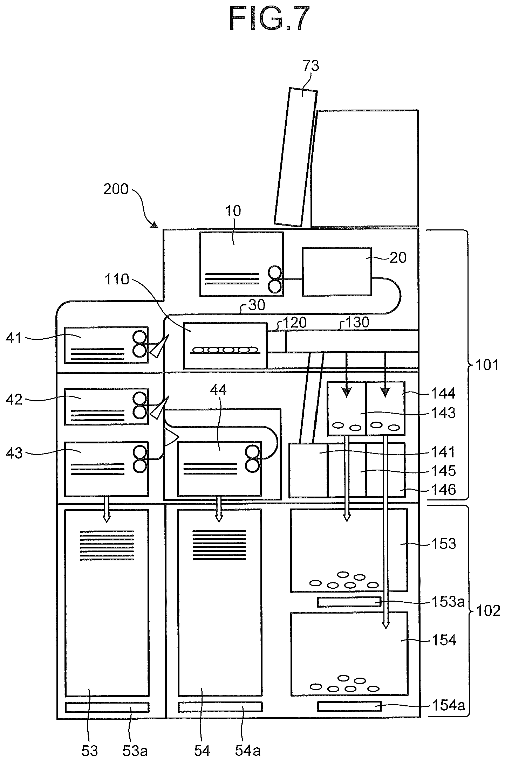

First of all, an internal configuration and an operation of a proceeds deposit machine 200 according to the second embodiment is explained. FIG. 7 is a view of an internal configuration of the proceeds deposit machine 200 according to the second embodiment. As shown in this drawing, a weight sensor 53a is arranged below the banknote cassette 53 and a weight sensor 54a is arranged below the banknote cassette 54 of the proceeds deposit machine 200. Moreover, a weight sensor 153a is arranged below the coin cassette 153 and a weight sensor 154a is arranged below the coin cassette 154.

The weight sensors 53a and 54a respectively measures the weight of the banknotes stored in the banknote cassettes 53 and 54. The weight sensors 53a and 54a respectively measures the weight of only the banknotes stored in the banknote cassettes 53 and 54, that is, less the weight of the banknote cassettes 53 and 54. A known technology can be used for these weight sensors 53a and 54a.

The weight sensors 153a and 154a respectively measures the weight of the coins stored in the coin cassettes 153 and 154. The weight sensors 153a and 154a respectively measures the weight of only the coins stored in the coin cassettes 153 and 154, that is, less the weight of the coin cassettes 153 and 154. A known technology can be used for these weight sensors 153a and 154a.

The banknote inserted into the banknote inlet 10 is transported via the recognition unit 20 to the temporary storage unit 43 or the temporary storage unit 44. In this case, the banknote is transported to the temporary storage unit 43 or 44 depending on each of the weight of the banknotes in the banknote cassettes 53 and 54 detected by the weight sensors 53a and 54a, respectively. This is to equalize each of the weight of the banknotes in the banknote cassettes 53 and 54 each other.

The coin inserted into the coin inlet 110 is transported via the coin recognition unit 120 to the coin temporary storage unit 143 or the coin temporary storage unit 144. In this case, the coin is transported to the coin temporary storage unit 143 or the coin temporary storage unit 144 depending on each of the weight of the coins stored in the coin cassettes 153 and 154 detected by the weight sensors 153a and 154a, respectively. This is to equalize each of the weight of the coin cassettes 153 and 154 each other.

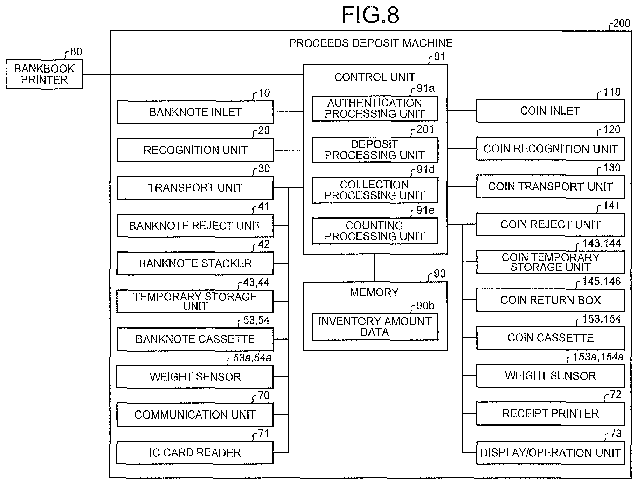

An internal functional configuration of the proceeds deposit machine 200 shown in FIG. 7 is explained next. FIG. 8 is a functional block diagram of the proceeds deposit machine 200 shown in FIG. 7. After the counting of the money is over, upon receiving an operation (approval operation) via the display/operation unit 73 instructing deposit of the counted money, a deposit processing unit 201 stores the counted money in the banknote cassette 53 or 54 and/or the coin cassette 153 or 154 based on the weight of the money detected by the weight sensors 53a, 54a, 153a, and 154a. Specifically, upon newly storing the banknote in the banknote cassette 53 or 54, each of the weight respectively detected by the weight sensors 53a and 54a at that point in time are compared, and for example, the banknote cassette 53 having the lighter weight of the banknotes is selected, and this banknote is temporarily stored in the temporary storage unit 43 corresponding to the banknote cassette 53.

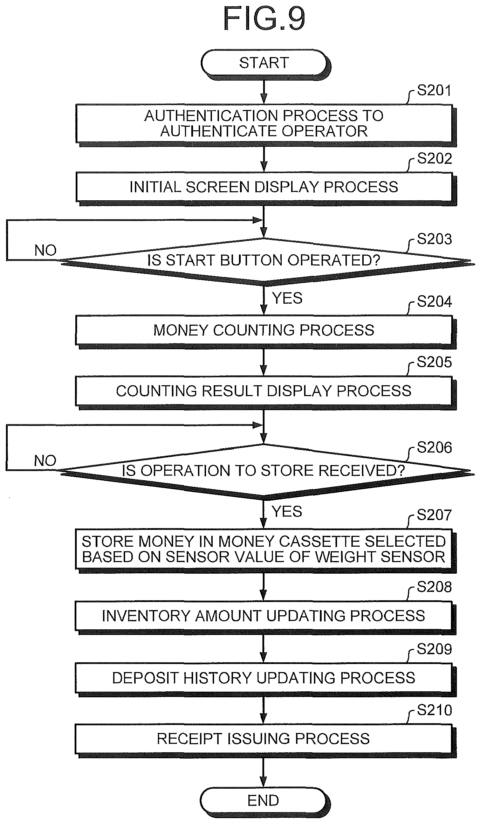

A process procedure performed by the proceeds deposit machine 200 shown in FIG. 7 is explained next. FIG. 9 is a flowchart of the process procedure performed by the proceeds deposit machine 200 shown in FIG. 7. As shown in this drawing, when the checkout counter cashier holds his cashier card over the IC card reader 71, the data recorded in the cashier card is read by the IC card reader 71, and the authentication processing unit 91a performs the authentication process by using the read data (recognition information of the staff member) (Step S201).

When it is determined that the checkout counter cashier has the powers and authorities, to enable the money deposit process, an initial screen of the money deposit process is displayed on the display/operation unit 73 (Step S202) . When a start button on the initial screen displayed at Step S202 is operated (YES: Step S203), a counting process of the banknotes inserted into the banknote inlet 10 and/or a counting process of the coins inserted into the coin inlet 110 is performed (Step S204), and the result of counting is displayed (Step S205).

If an operation instructing storage of the money is received from the checkout counter cashier (YES: Step S206), the money cassette is selected based on the weight (sensor value) of the money detected by the weight sensors 53a, 54a, 153a, and 154a, and the money is stored in the selected money cassette (Step S207) . Specifically, the weight of the banknotes in the banknote cassette A and the weight of the banknotes in the banknote cassette B are compared, and the banknote is stored in the temporary storage unit corresponding to the lighter banknote cassette. Similarly, the coin is stored in the temporary storage unit corresponding to the lighter coin cassette. Note that, the banknote/coin temporarily stored in the temporary storage unit is stored in the banknote/coin cassette corresponding to the temporary storage unit, respectively.

Then, the number of the money stored at Step S207 is added to the inventory amount data 90b (Step S208), the result of money deposit process is registered in not-shown deposit history data (Step S209), a receipt on which is printed the result of money deposit process is issued by the receipt printer 72 (Step S210), and the process is finished.

As has been explained above, in the second embodiment, upon receiving an operation instructing storage of the money in a state in which the banknote and/or the coin has been inserted into the banknote inlet 10 and/or the coin inlet 110, the lighter money cassette is selected based on the weight of the money detected by the weight sensors 53a, 54a, 153a, and 154a, and the banknote and/or the coin is stored in the selected money cassette. Therefore, when the collector of the cash-in-transit company, the shop, and the like collects the banknote cassettes 53 and 54 and/or the coin cassettes 153 and 154, the load of the staff member in transporting the banknote cassettes 53 and 54 and/or the coin cassettes 153 and 154 can be efficiently reduced. Particularly, because it is not necessary to calculate the weight of the money, the money cassette for storing the money can be identified speedily, and the proceeds from sales can be deposited speedily.

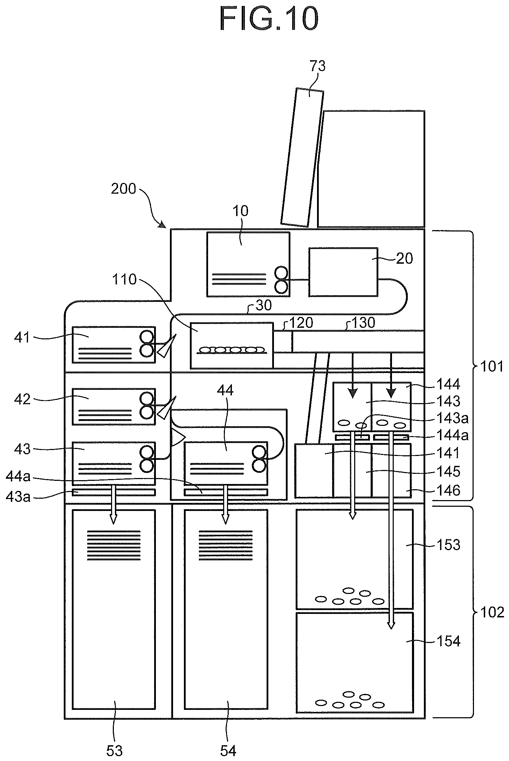

In the second embodiment, a case is explained in which the weight sensors 53a, 54a, 153a, and 154a are provided to the banknote cassettes 53 and 54 and the coin cassettes 153 and 154 respectively; however, the present invention is not limited to this. Specifically, as shown in FIG. 10, weight sensors 43a, 44a, 143a, and 144a can be provided to the temporary storage units 43, 44, 143, and 144 that correspond to the banknote cassettes 53 and 54 and the coin cassettes 153 and 154, respectively. This is because, there are situations in which the money is temporarily stored for a relatively longer time in the temporary storage units 43, 44, 143, and 144. The process in this case is similar to that in the second embodiment.

In some proceeds deposit machines, one temporary storage unit is provided and shared by a plurality of the money cassettes, and money is stored in the money cassettes from this temporary storage unit. In such a configuration, the banknote inserted into the banknote inlet 10 is temporarily stored in the temporary storage unit, and the banknote temporarily stored in the temporary storage unit is stored in a banknote cassette, between the banknote cassettes 53 and 54, in which the weight of the money stored therein is lighter.

In the first embodiment and the second embodiment, it is explained to store the banknote in the banknote cassette between the two banknote cassettes 53 and 54 of which the weight of the banknotes therein is lighter; however, it is allowable to store the banknote in one of the two banknote cassettes 53 and 54 such that a difference between each of the weight of the banknotes in the banknote cassettes 53 and 54 is less than a predetermined value. The same method can be used for the coin. In such a configuration, a banknote cassette in which the weight of the money stored therein is lighter is not necessarily selected. As long as the difference between each of the weight of the banknotes in two the banknote cassettes 53 and 54 is less than the predetermined value, the banknote is stored in the banknote cassette in which the previous banknote was stored.

In the first embodiment and the second embodiment, it is explained to calculate or detect the weight of banknotes; however, the weight of the banknotes depends on humidity. Even if the quantity of the banknotes is the same, the weight thereof may increase if the humidity is high. Therefore, one approach is to correct the weight of the banknote based on the current humidity to calculate the weight at a predetermined humidity.

### THIRD EMBODIMENT

In the first embodiment and the second embodiment, it is explained to select a money cassette as a storing destination of the money to be newly stored based on each of the weight of the money stored in the plurality of money cassettes; however, the present invention is not limited to this, and the money cassette as the storing destination of the money can be changed each time the deposit of the proceeds from sales is received. This is because there may not be a big difference in the proceeds from sales stored by each checkout counter cashier. Therefore, in a third embodiment, a case of changing the money cassette as the storing destination of the money each time the deposit of proceeds from sales is received is explained.

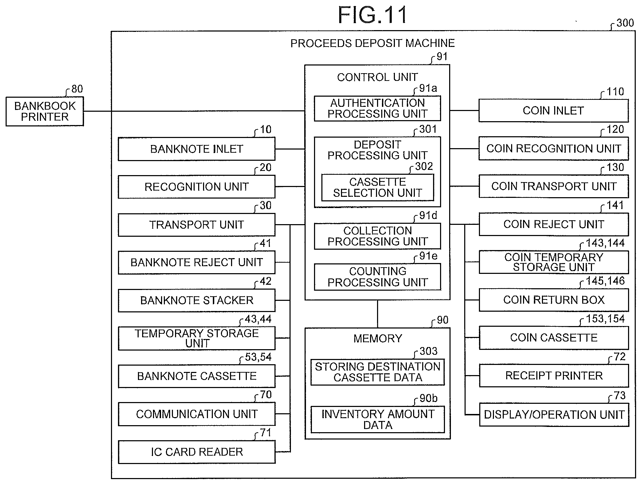

First of all, an internal functional configuration of a proceeds deposit machine 300 according to the third embodiment is explained. FIG. 11 is a functional block diagram of the proceeds deposit machine 300 according to the third embodiment. As shown in this drawing, storing destination cassette data 303 is stored in the memory 90 of the proceeds deposit machine 300, and a cassette selection unit 302 in a deposit processing unit 301 selects a storing destination of the money among the banknote cassettes 53 and 54 and the coin cassettes 153 and 154 based on the storing destination cassette data 303.

For example, if the money was stored in the banknote cassette 53 (banknote cassette A) and/or the coin cassette 153 (coin cassette a) last time, the storing destination cassette data 303 contains recognition information of the banknote cassette 54 (banknote cassette B) and/or the coin cassette 154 (coin cassette b). Therefore, when newly storing the money, the banknote cassette 54 (banknote cassette B) and/or the coin cassette 154 (coin cassette b) is selected by the cassette selection unit 302, and the money is stored in the selected banknote cassette 54 (banknote cassette B) and/or the coin cassette 154 (coin cassette b).

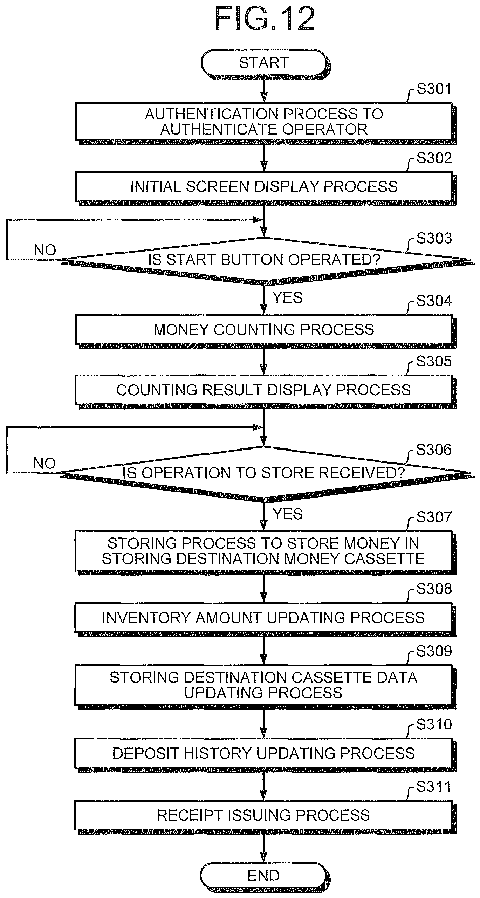

A process procedure performed by the proceeds deposit machine 300 shown in FIG. 11 is explained next. FIG. 12 is a flowchart of the process procedure performed by the proceeds deposit machine 300 shown in FIG. 11. As shown in this drawing, when the checkout counter cashier holds his cashier card over the IC card reader 71, the data recorded in the cashier card is read by the IC card reader 71, and the authentication processing unit 91a performs the authentication process by using the read data (recognition information of the staff member) (Step S301).

When it is determined that the checkout counter cashier has the powers and authorities, to enable the money deposit process, an initial screen of the money deposit process is displayed on the display/operation unit 73 (Step S302) . When a start button on the initial screen displayed at Step S302 is operated (YES: Step S303), a counting process of the banknotes inserted into the banknote inlet 10 and/or a counting process of the coins inserted into the coin inlet 110 is performed (Step S304), and the result of counting is displayed (Step S305).

If an operation instructing storage of the money is received from the checkout counter cashier (YES: Step S306), the money cassette is selected by referring to the storing destination cassette data 303, and the money is stored in the selected money cassette (Step S307). Specifically, because the storing destination cassette data 303 contains the recognition information of the money cassette as the storing destination, the money is stored in the temporary storage unit corresponding to the money cassette matching with this recognition information. Note that, the banknote/coin temporarily stored in the temporary storage unit is stored in the banknote/coin cassette corresponding to the temporary storage unit, respectively.

Then, the number of the money stored at Step S307 is added to the inventory amount data 90b (Step S308), and the storing destination cassette data 303 is updated (Step S309) . Specifically, if the money is stored in the banknote cassette 53 and/or the coin cassette 153, the recognition information of the banknote cassette 54 and/or the coin cassette 154 is added in the storing destination cassette data 303. Then, the result of money deposit process is registered in not-shown deposit history data (Step S310), a receipt on which is printed the result of money deposit process is issued by the receipt printer 72 (Step S311), and the process is finished.

As has been explained above, in the third embodiment, upon receiving an operation instructing storage of the money in a state in which the banknote and/or the coin has been inserted into the banknote inlet 10 and/or the coin inlet 110, the money cassette is selected by referring to the storing destination cassette data 303, and the money is stored in the selected money cassette. Therefore, when the collector of the cash-in-transit company, the shop, and the like collects the banknote cassettes 53 and 54 and/or the coin cassettes 153 and 154, the load of the staff member in transporting the banknote cassettes 53 and 54 and/or the coin cassettes 153 and 154 can be efficiently reduced. Particularly, because it is not necessary to calculate the weight of the money, the money cassette for storing the money can be identified speedily, and the proceeds from sales can be deposited speedily.

### FOURTH EMBODIMENT

In the third embodiment, the money cassette as the storing destination of the money is changed each time the deposit of proceeds from sales is received; however, the present invention is not limited to this, and it is possible to change the money cassette as the storing destination of the money each time the weight of the money reaches to a predetermined weight. Therefore, in a fourth embodiment, a case of changing the money cassette as the storing destination of the money each time the weight of the money reaches to the predetermined weight is explained.

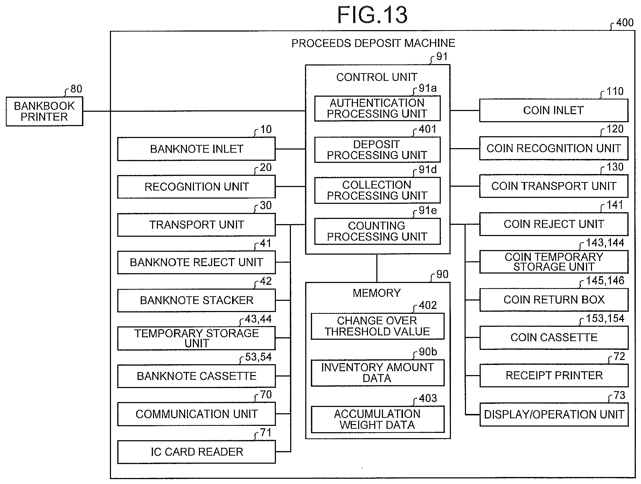

First of all, an internal functional configuration of a proceeds deposit machine 400 according to the fourth embodiment is explained. FIG. 13 is a functional block diagram of the proceeds deposit machine 400 according to the fourth embodiment. As shown in this drawing, a changeover threshold value 402 and accumulation weight data 403 are stored in the memory 90 of the proceeds deposit machine 400.

A value "2 kg", for example, is set in the changeover threshold value 402. An accumulation weight of the money stored in the past in the money cassette is contained in the accumulation weight data 403. For example, when the banknote and the coin are stored in the banknote cassette 53 and the coin cassette 153, respectively, the accumulation weight data 403 contains the accumulation weight of the stored banknotes and the accumulation weight of the stored coins. When the accumulation weight of the banknotes stored in the banknote cassette 53 exceeds the changeover threshold value 402, the storing destination is changed so that the subsequent banknote is stored in the banknote cassette 54. After such a changeover, the accumulation weight of the banknotes in the accumulation weight data 403 is reset. Similarly, when the accumulation weight of the coins stored in the coin cassette 153 exceeds the changeover threshold value 402, the storing destination is changed so that the subsequent coin is stored in the coin cassette 154. After such a changeover, the accumulation weight of the coins in the accumulation weight data 403 is reset.

A deposit processing unit 401 maintains information to identify the money cassette (e.g., banknote cassette A and/or coin cassette a) as the storing destination of the money at the current point in time. Moreover, the weight of the banknotes stored in the banknote cassette (e.g., banknote cassette A) whose recognition information has been maintained is calculated, and each time the banknote is stored in the banknote cassette A, the accumulation weight of the banknotes in the accumulation weight data 403 is added and updated. When the accumulation weight of the banknotes in the accumulation weight data 403 exceeds the changeover threshold value 402, information "banknote cassette B" is maintained to enable changing the banknote cassette as the storing destination from the banknote cassette A to the banknote cassette B, and the accumulation weight of the banknotes in the accumulation weight data 403 is reset. Similarly, the weight of the coins stored in the coin cassette (e.g., coin cassette a) whose recognition information has been maintained is calculated, and each time the coin is stored in the coin cassette a, the accumulation weight of the coins in the accumulation weight data 403 is added and updated. When the accumulation weight of the coins in the accumulation weight data 403 exceeds the changeover threshold value 402, information "coin cassette b" is maintained to enable changing the coin cassette as the storing destination from the coin cassette a to the coin cassette b, and the accumulation weight of the coins in the accumulation weight data 403 is reset.

For the convenience of explanation, a detailed explanation about the calculation of the weight of the banknote and/or the coin will be omitted herefrom. Like the weight is calculated by the weight calculating unit 91c in the first embodiment, the weight of the money can be calculated by using the unit weight data 90a.

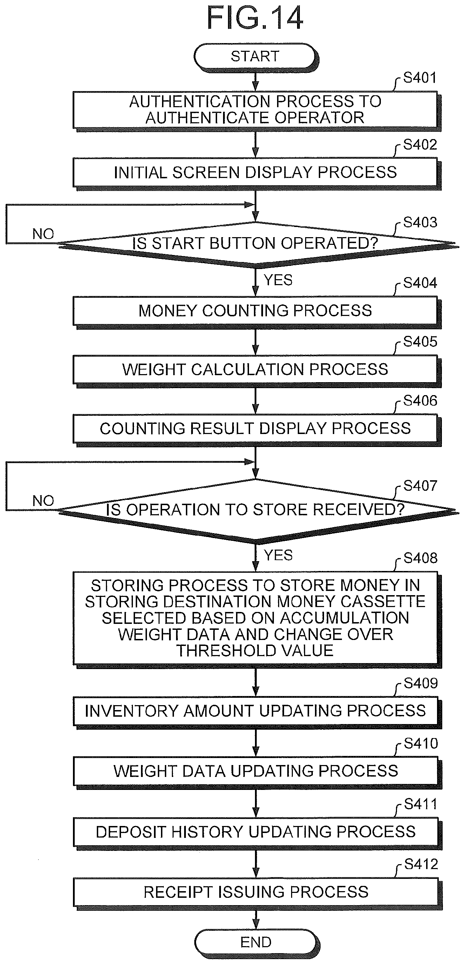

A process procedure performed by the proceeds deposit machine 400 shown in FIG. 13 is explained next. FIG. 14 is a flowchart of the process procedure performed by the proceeds deposit machine 400 shown in FIG. 13. As shown in this drawing, when the checkout counter cashier holds his cashier card over the IC card reader 71, the data recorded in the cashier card is read by the IC card reader 71, and the authentication processing unit 91a performs the authentication process by using the read data (recognition information of the staff member) (Step S401).

When it is determined that the checkout counter cashier has the powers and authorities, to enable the money deposit process, an initial screen of the money deposit process is displayed on the display/operation unit 73 (Step S402) . When a start button on the initial screen displayed at Step S402 is operated (YES: Step S403), a counting process of the banknotes inserted into the banknote inlet 10 and/or a counting process of the coins inserted into the coin inlet 110 is performed (Step S404), the weight of the banknotes and/or the coins is calculated (Step S405), and the result of counting is displayed (Step S406).

If an operation instructing storage of the money is received from the checkout counter cashier (YES: Step S407), the money is stored in the storing destination money cassette selected based on the accumulation weight data 403 and the changeover threshold value 402 (Step S408).

Then, the number of the money stored at Step S408 is added to the inventory amount data 90b (Step S409), and the accumulation weight data 403 is updated (Step S410). Specifically, when not changing the money cassette as the storing destination, a result of calculation of the weight is added to the accumulation weight data 403, and when changing the money cassette as the storing destination, the accumulation weight data 403 is reset. Then, the result of money deposit process is registered in not-shown deposit history data (Step S411), a receipt on which is printed the result of money deposit process is issued by the receipt printer 72 (Step S412), and the process is finished.

As has been explained above, in the fourth embodiment, upon receiving an operation instructing storage of the money in a state in which the banknote and/or the coin has been inserted into the banknote inlet 10 and/or the coin inlet 110, the money is stored in the same money cassette as far as the accumulation weight in the accumulation weight data 403 does not exceed the changeover threshold value 402, and the money is stored in another money cassette when the changeover threshold value 402 is exceeded. Therefore, when the collector of the cash-in-transit company, the shop, and the like collects the banknote cassettes 53 and 54 and/or the coin cassettes 153 and 154, the load of the staff member in transporting the banknote cassettes 53 and 54 and/or the coin cassettes 153 and 154 can be efficiently reduced.

### FIFTH EMBODIMENT

In the first embodiment to the fourth embodiment, the proceeds deposit machine unitarily selected the money cassette as the storing destination of the money; however, the present invention is not limited to this, and the proceeds deposit machine can select the money cassette by cooperating with the checkout counter change machine. Therefore, in a fifth embodiment, a case is explained in which the proceeds deposit machine selects the money cassette in cooperation with the checkout counter change machine.

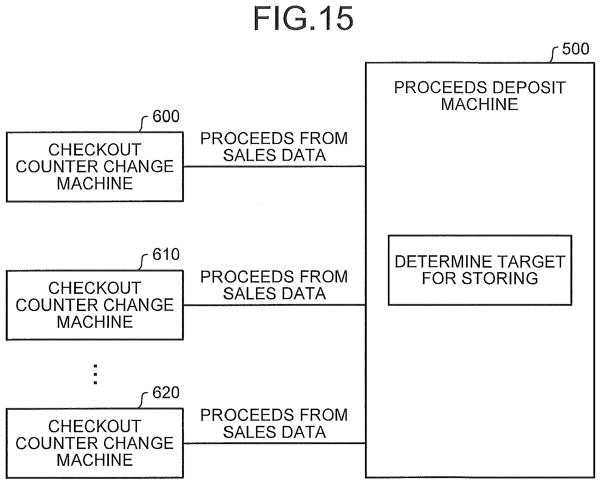

FIG. 15 is a view of a system configuration according to the fifth embodiment. As shown in this drawing, a proceeds deposit machine 500 is communicably connected to checkout counter change machines 600 to 620 arranged at different checkout counters. The proceeds deposit machine 500 determines a money cassette as a target for storing based on proceeds from sales data sent from each of the checkout counter change machines 600 to 620. Specifically, a correspondence is created between the banknote cassette and the coin cassette, and each of the checkout counter change machines 600 such that each of the weight of the banknotes in the banknote cassettes A and B, and each of the weight of the coins in the coin cassettes a and b become equal respectively. Accordingly, when the data recorded in the cashier card of the checkout counter cashier is read by the IC card reader 71 and the checkout counter change machine can be identified, in which one of the banknote cassettes and/or the coin cassettes the banknote and/or the coin as the proceeds from sales is to be stored can be selected. For the convenience of explanation, a case in which the proceeds deposit machine 500 and the checkout counter change machines 600 to 620 are communicably connected to each other is explained above; however, the proceeds deposit machine 500 and the POS terminals arranged at the checkout counters can be communicably connected to each other to perform the similar process.

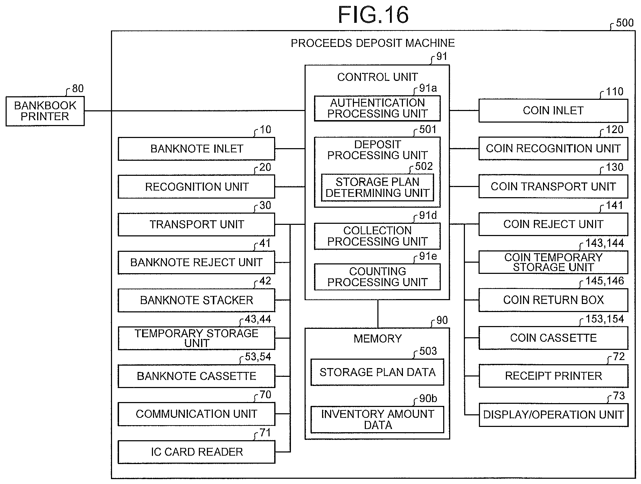

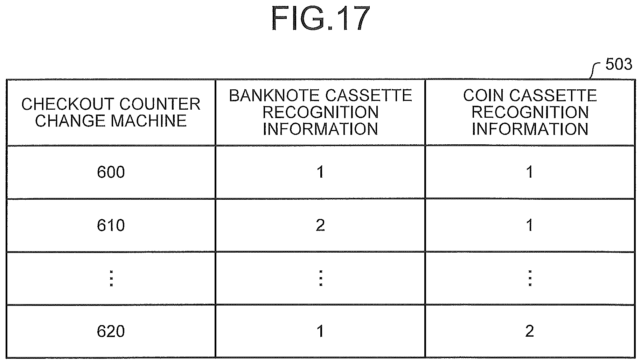

FIG. 16 is a functional block diagram of the proceeds deposit machine 500 shown in FIG. 15. As shown in this drawing, storage plan data 503 is stored in the memory 90 of the proceeds deposit machine 500. The storage plan data 503 is data in which the money cassettes for storing the money are mapped with recognition information of the checkout counter change machines 600 to 620. For example, in an example shown in FIG. 17, the banknote cassette A (recognition information "1") and the coin cassette a (recognition information "1") are mapped with the checkout counter change machine 600, the banknote cassette B (recognition information "2") and the coin cassette a are mapped with the checkout counter change machine 610, and the banknote cassette A and the coin cassette b (recognition information "2") are mapped with the checkout counter change machine 620.

A deposit processing unit 501 identifies the money cassette based on the storage plan data 503 and stores the money in the identified money cassette. For example, if the checkout counter change machine 600 is mapped with the banknote cassette A and the coin cassette a and if the checkout counter change machine 600 is identified from the recognition information of the checkout counter cashier, the banknotes as the proceeds from sales are stored in the banknote cassette A and the coins as the proceeds from sales are stored in the coin cassette a.

A storage plan determining unit 502 is a processing unit that determines a money cassette in which the storage of the money is planned based on the proceeds from sales data sent from each of the checkout counter change machines 600 to 620. Specifically, the money cassette in which the storage of the money is planned is determined such that each of the weight of the banknotes in the banknote cassettes A and B become equal as much as possible and each of the weight of the coins in the coin cassettes a and b become equal as much as possible. Note that, if types and numbers of the banknotes and the coins as the proceeds from sales can be identified, the weight of the proceeds from sales (banknotes and/or coins) that is later brought in from each of the checkout counter change machines 600 to 620 can be identified. Therefore, based on the identified weight, the banknotes can be distributed so that each of the weight of the banknotes in the banknote cassettes A and B become equal as much as possible and the coins can be distributed so that each of the weight of the coins in the coin cassettes a and b become equal as much as possible. A known technology can be used for such a distribution.

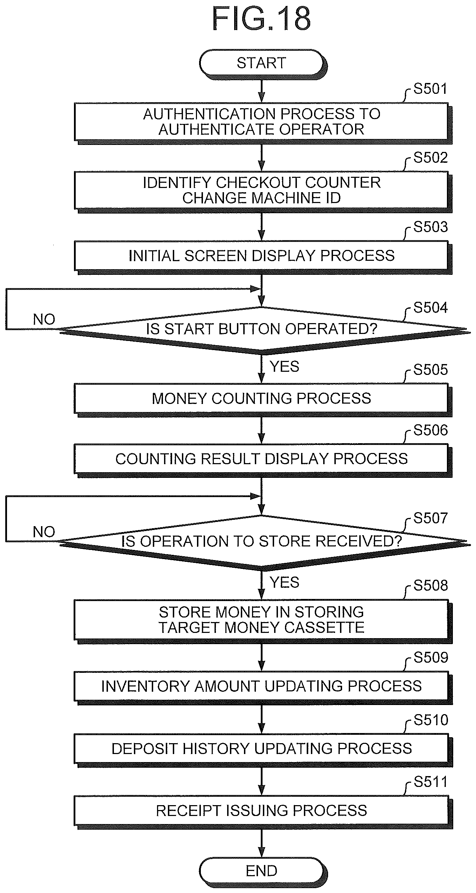

A process procedure performed by the proceeds deposit machine 500 shown in FIG. 16 is explained next. FIG. 18 is a flowchart of the process procedure performed by the proceeds deposit machine 500 shown in FIG. 16. As shown in this drawing, when the checkout counter cashier holds his cashier card over the IC card reader 71, the data recorded in the cashier card is read by the IC card reader 71, and the authentication processing unit 91a performs the authentication process by using the read data (recognition information of the staff member) (Step S501), and the recognition information (checkout counter change machine ID) of the checkout counter change machine is identified (Step S502).

When it is determined that the checkout counter cashier has the powers and authorities, to enable the money deposit process, an initial screen of the money deposit process is displayed on the display/operation unit 73 (Step S503). When a start button on the initial screen displayed at Step S503 is operated (YES: Step S504), a counting process of the banknotes inserted into the banknote inlet 10 and/or a counting process of the coins inserted into the coin inlet 110 is performed (Step S505), and the result of counting is displayed (Step S506).

If an operation instructing storage of the money is received from the checkout counter cashier (YES: Step S507), the money cassette mapped with the checkout counter change machine is identified by referring to the storage plan data 503, the money is stored in the identified money cassette (Step S508).

Then, the number of the money stored at Step S508 is added to the inventory amount data 90b (Step S509), the result of money deposit process is registered in not-shown deposit history data (Step S510), a receipt on which is printed the result of money deposit process is issued by the receipt printer 72 (Step S511), and the process is finished.

As has been explained above, in the fifth embodiment, based on the proceeds from sales data sent previously from the checkout counter change machines 600 to 620, the money is distributed so that the money in the money cassettes becomes equal and information about the distribution is stored in the storage plan data 503, upon receiving an operation instructing storage of the money in a state in which the banknote and/or the coin has been inserted into the banknote inlet 10 and/or the coin inlet 110, the money cassette for storing the money is identified based on the storage plan data 503, and the money is stored in the identified money cassette . Therefore, when the collector of the cash-in-transit company, the shop, and the like collects the banknote cassettes 53 and 54 and/or the coin cassettes 153 and 154, the load of the staff member in transporting the banknote cassettes 53 and 54 and/or the coin cassettes 153 and 154 can be efficiently reduced.

Because in the first embodiment to the fifth embodiment an explanation about handling of a change fund in the proceeds deposit machine has been omitted, the handling of the change fund is explained below. Conventionally, the change fund is delivered from the cash center by using a change fund delivery service and the like, and change for each checkout counter is prepared by using a batch function of the proceeds deposit machine. However, because the change fund is delivered from the cash center, it is necessary to inform previously to the cash center and the like of the number of the change fund for each denomination, such a communication puts an unreasonable burden on the staff member.

Therefore, the present embodiment is configured so that, upon receiving a predetermined change fund mode selection operation, the change fund is stored in one of the money cassettes originally used for storing the proceeds deposit machine and the proceeds from sales is stored in the other money cassette. Specifically, the change fund (number for each denomination) to be stored in the money cassette is set previously from a host application installed in the proceeds deposit machine, and when the checkout counter cashier deposits the proceeds from sales, among the money of the denomination set as the change fund and the money of the number and the denomination specified as the change fund is transported to the money cassette X, among the money of the denomination not set as the change fund and the money of the denomination set as the change fund and the money exceeding the specified number is transported to the money cassette Y. Accordingly, the change fund can be prepared even without receiving the delivery of the change fund from the cash center. Then, this change fund can be collected and the change for each of the checkout counters can be prepared by using the batch function. Accordingly, the cash can be efficiently recycled inside the shop, and even if an unpredictable situation occurs because of an event and the like, it is possible to respond on a case-by-case basis.

### SIXTH EMBODIMENT

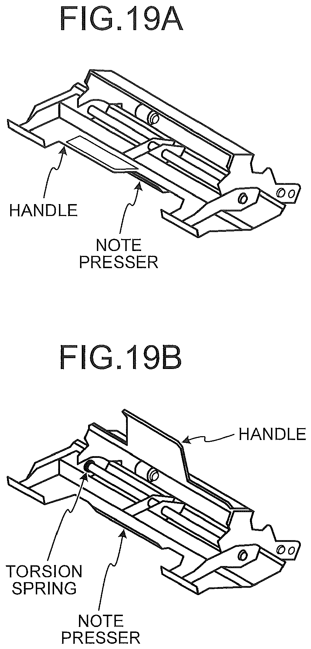

A conventional banknote inlet is provided with a "note pressing mechanism" shown in FIG. 19A. In contrast, in the present embodiment, a "note pressing mechanism" shown in FIG. 19B is provided. Specifically, a position of a handle part is changed, and a torsion spring is provided additionally.

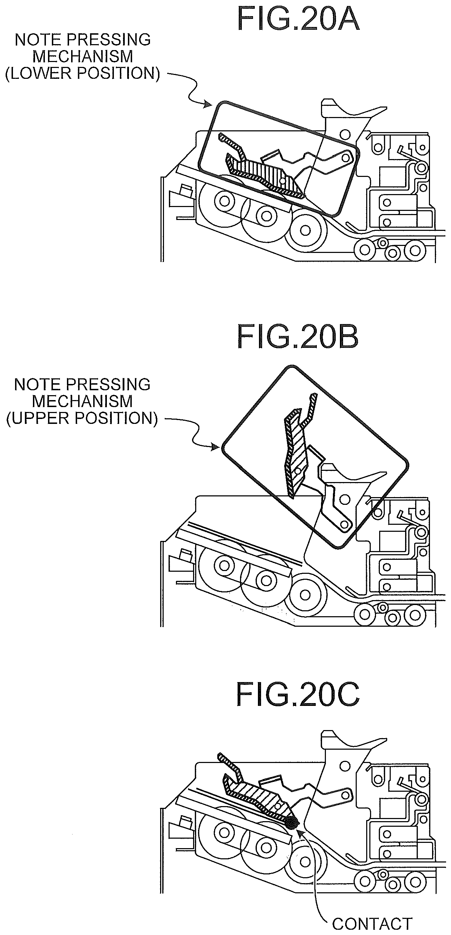

In the case of the conventional note pressing mechanism, when setting a small number of the banknotes in the banknote inlet, the checkout counter cashier, who is the operator, lifts the handle part of a note presser, and when the checkout counter cashier releases the hold in a state in which the handle part is in an upper position, the note pressing mechanism returns to a lower position by the action of a spring. However, in such a conventional note pressing mechanism, because ends of the set banknotes are swatted by the note presser by the force of the spring, note misalignment occurs (see FIGS. 20A to 20C) . As a result, if the banknotes in which the note misalignment has occurred are fed, reject, such as narrow chaining space, double feeding, and the like occurs.

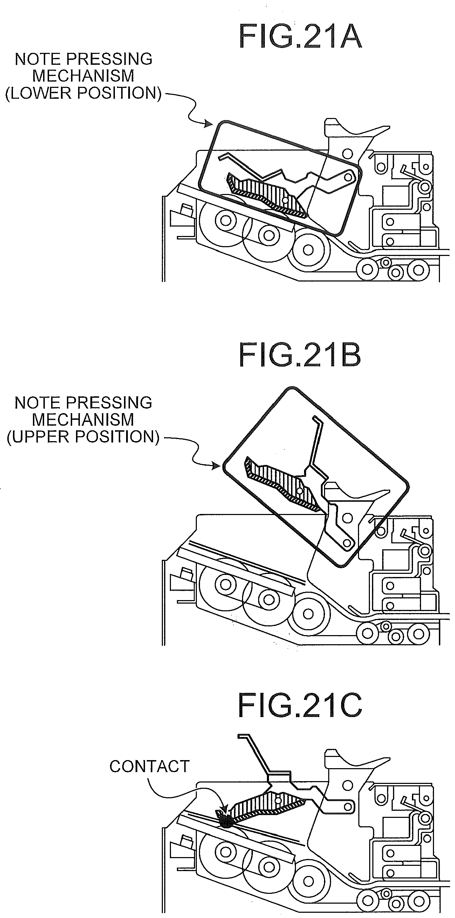

Thus, in the present embodiment, to reduce the effect of the user operation on the note presser, the handle part is constituted by a different part and the torsion spring that touches trailing ends of the banknotes when the note presser falls is additionally provided. Specifically, the note pressing mechanism is lifted from a lower position thereof shown in FIG. 21A to an upper position thereof shown in FIG. 21B, and when the note pressing mechanism is dropped as shown in FIG. 21C, the note pressing mechanism contacts the trailing ends of the banknotes. Therefore, in the present embodiment, the note misalignment does not occur. Note that, the above explanation has been given for the case of setting the banknotes; however, the same explanation holds true for setting gift certificates.

Moreover, the various structural components mentioned in the above embodiments are functional and are not necessarily present physically. That is, decentralization and / or unification of various components is not limited to that shown in the drawings. All of or some of the components can be decentralized and / or unified in desired units, functionally or physically, depending on various load, operating conditions, and the like.

### [Industrial Applicability]

As explained above, the money handling apparatus and the money handling system according to present invention are useful when a collector of a cash-in-transit company, a shop, and the like collects a plurality of money storage units (money cassettes).

### [Explanation of Reference Numerals]

- 10: Banknote inlet
- 20: Recognition unit
- 30: Transport unit
- 40: Temporary storage portion
- 41: Banknote reject unit
- 42: Banknote stacker
- 43, 44: Temporary storage unit
- 43a, 44a: Weight sensor
- 53, 54: Banknote cassette
- 70: Communication unit
- 71: IC card reader
- 72: Receipt printer
- 73: Display/operation unit
- 80: Bankbook printer
- 90: Memory
- 90a: Unit weight data
- 90b: Inventory amount data
- 90c: Money weight data
- 91: Control unit
- 91a: Authentication processing unit
- 91b: Deposit processing unit
- 91c: Weight calculating unit
- 91d: Collection processing unit
- 91e: Counting processing unit
- 100: Proceeds deposit machine
- 101: Upper unit
- 102: Lower unit
- 110: Coin inlet
- 120: Coin recognition unit
- 130: Coin transport unit
- 141: Coin reject unit
- 143, 144: Coin temporary storage unit
- 145, 146: Coin return box
- 153, 154: Coin cassette

## Claims

1. A money handling apparatus comprising:
an inlet configured to take in money into a body of the apparatus;
a plurality of money storage units configured to be detachably arranged to the body and store thereinto the money; and
a control unit configured to control so as to store the money taken in from the inlet into the money storage units such that the weight of the money stored in each of the money storage units is substantially equal to each other.

2. The money handling apparatus as claimed in claim 1,
further comprising a plurality of temporary storage units configured to temporarily store thereinto all or a part of the money taken in from the inlet, the temporary storage units each being arranged to each of corresponding the plurality of money storage units,
wherein the control unit controls so as to
temporarily store the money taken in from the inlet into the temporary storage units such that the weight of the money to be stored into each of the money storage units is substantially equal, and
store the money temporarily stored in the temporary storage units into the corresponding money storage units.

3. The money handling apparatus as claimed in claim 1,
further comprising a temporary storage unit configured to be arranged between the inlet and the money storage units and temporarily store all or a part of the money taken in from the inlet,
wherein the control unit controls so as to
temporarily store the money taken in from the inlet into the temporary storage unit, and
in response to a predetermined operation, controls so as to store the money stored in the temporary storage unit into the money storage units such that the weight of the money to be stored in the money storage units is substantially equal.

4. The money handling apparatus as claimed in claim 1, wherein the control unit
identifies the each weight of the money stored in each of the money storage units,
compares the identified each weight of the money stored in each of the money storage units, and
controls so as to store the money taken in from the inlet into the money storage unit in which the weight of the money contained therein is the lightest.

5. The money handling apparatus as claimed in claim 4, wherein the control unit calculates the weight of the money from a number of the money for each denomination stored in the money storage unit and weight of one piece of money.

6. The money handling apparatus as claimed in claim 4, wherein the control unit obtains the weight of the money based on a signal from a weight sensor arranged corresponding to each of the money storage units.

7. The money handling apparatus as claimed in claim 2, wherein the control unit
calculates the weight of the money temporarily stored in the temporary storage unit corresponding to the money storage unit,
compares the calculated weight of the money temporarily stored in the temporary storage units, and
controls to temporarily store the money taken in from the inlet into the temporary storage unit of which the weight of the money contained therein is the lightest.

8. The money handling apparatus as claimed in claim 1, wherein the control unit
controls so as to receive the money taken in from the inlet by a transaction, and
changes the money storage unit as a storing destination of the money taken in from the inlet by the transaction.

9. The money handling apparatus as claimed in claim 1, wherein the control unit controls so as to change a storing destination of the money taken in from the inlet to a second money storage unit when the weight of the money stored in a first money storage unit as a current storing destination reaches a predetermined weight.

10. The money handling apparatus as claimed in claim 2, wherein the control unit controls so as to change a temporarily soring destination of the money taken in from the inlet to a second temporary storage unit when the weight of the money stored in a first temporary storage unit as a current temporarily storing destination reaches a predetermined weight.

11. The money handling apparatus as claimed in claim 2, wherein the control unit, upon receiving an operation to select a predetermined change fund mode, controls so as to
temporarily store a predetermined number of money of a denomination previously specified as change fund in a first temporary storage unit, and
temporarily store money that exceeds the predetermined number and money of a denomination not specified as the change fund in a second temporary storage unit.

12. A money handling system in which a plurality of change machines and a money handling apparatus arranged in a shop are communicably connected, wherein
each of the change machines includes a notifying unit that notifies, at a previously specified time point, the money handling apparatus of money information relating to a schedule of deposit,
the money handling apparatus includes
an inlet configured to take in money into a body of the apparatus;
a plurality of money storage units configured to be detachably arranged to the body and store thereinto the money;
a scheduling unit configured, based on the money information notified from the change machines, to perform scheduling to distribute money in the money storage units such that the weight of the money to be stored in each of the money storage units is substantially equal to each other;
an identifying unit configured to identify the change machine in which money to be taken in from the inlet is present; and
a control unit configured to control, when the money present in the change machine identified by the identifying unit is taken in from the inlet, so as to store the money in the money storage unit scheduled by the scheduling unit.
